(19) Europäisches Patentamt
European Patent Office
Office européen des brevets

(11) **EP 2 799 825 A1**

(12) **EUROPEAN PATENT APPLICATION**
published in accordance with Art. 153(4) EPC

(43) Date of publication:
**05.11.2014 Bulletin 2014/45**

(51) Int Cl.:
*G01K 7/22* (2006.01)   *G01K 7/24* (2006.01)
*G01K 7/00* (2006.01)

(21) Application number: **12863650.3**

(22) Date of filing: **24.02.2012**

(86) International application number:
**PCT/CN2012/071580**

(87) International publication number:
**WO 2013/097336 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2011   CN 201110440878**

(71) Applicants:
• **Zhejiang University**
  **Xihu District**
  **Hangzhou**
  **Zhejiang 310027 (CN)**
• **Zhejiang Tuwei Electricity Technology Co., Ltd.**
  **Hangzhou City, Zhejiang Province 310012 (CN)**

(72) Inventors:
• **WU, Jiande**
  **CN/Hangzhou City, Zhejiang Province, 210012 (CN)**

• **ZHAO, Chongwen**
  **CN/Hangzhou City, Zhejiang Province, 210012 (CN)**
• **HUANG, Qiang**
  **CN/Hangzhou City, Zhejiang Province, 210012 (CN)**
• **HE, Xiangning**
  **CN/Hangzhou City, Zhejiang Province, 210012 (CN)**

(74) Representative: **Isarpatent**
**Patent- und Rechtsanwälte**
**Friedrichstrasse 31**
**80801 München (DE)**

(54) **COUPLING-BASED NON-CONTACT TYPE TEMPERATURE MEASUREMENT SYSTEM AND MEASUREMENT METHOD THEREOF**

(57)   A coupling-based non-contact type temperature measurement system comprises a controller, a drive circuit connected to the controller, a switch circuit connected to the drive circuit, a resonance circuit connected to the switch circuit, a temperature sensor coupled to the resonance circuit, and a signal detection circuit connected to the resonance circuit and the controller. In the non-contact type temperature measurement system, the temperature sensor is isolated from other components of the system, and non-contact type temperature measurement of an object is implemented through electromagnetic coupling. The system has a simple circuit and a low cost and is suitable for small scale design, thus applicable to various scenarios. What Further provided is a measurement method of a coupling-based non-contact type temperature measurement system. The measurement method implements the transfer of a temperature signal in an electromagnetic coupling form, and performs calculation and analysis according to the temperature signal, thereby implementing non-contact type temperature of an object, and is therefore applicable to reliable temperature measurement for internal core wires in high-voltage power cables.

Controller → Drive circuit → Switch circuit → Resinance circuit ↔ Temperature sensor

Signal detection corcuit

Fig. 1 (as drawing to abstract)

**Description**

**Field of the Invention**

The invention relates to temperature measurement technology, and particularly, the invention relates to a coupling-based non-contact type temperature measurement system and measurement method thereof.

**Background to the invention**

In daily life and process of industrial production, temperature of kinds of objects is needed to be measured. Temperature is a very important parameter in many technological fields and a measurement device is needed to monitor the temperature in many technological fields, i.e. industry, medical treatment, military domain and everyday life and so on. It has been one of the most important methods to monitor temperature automatically to manufacture safely and reduce loss in kinds of industries. In specific cases, it requires longer time and more expense to measure temperature with traditional measurement methods due to scattered and remote monitoring points, and the surveyor has to measure the temperature on the spot, which results in very low efficiency of work.

There are two major types of temperature measurement technologies, including contact type temperature measurement and non-contact type temperature measurement. For the contact type temperature measurement technology, a sensor must cling to the surface of measured objects, and meanwhile measurement circuit must be in connection with the sensor. Frequently-used contact type temperature measurement technology includes Thermocouple Temperature Measurement Technology, Thermal Resistor Temperature Measurement Technology, Semiconductor Temperature Measurement Technology and Optical Fiber Temperature Measurement Technology and so on. Non-contact type temperature measurement system, represented by the Optical Temperature Measurement Technology, , has much better sensitivity, precision, stability and much higher automation degree, and the most common Optical Measurement Technologies include Spectral Temperature Measurement Technology, Holographic Interferometry Temperature Measurement Technology, CCD-Based Tri-Color Temperature Measurement Technology and Infrared Radiation Temperature Measurement Technology. In non-contact type temperature measurement system, measurement circuit is isolated from surface of object to be measured. Non-contact type temperature measurement system applies to long-distance measurement or some special occasions.

Patent application with publication number US 2004/0066833 A1 disclosed a non-contact temperature measurement device based on optical measurement technology, and the device includes an output display device corresponding to temperature detecting to easily use for user. Patent application with publication number US 2007/0019705 A1 disclosed an anemometer with non-contact temperature measurement capability, including a temperature sensor based on optical measurement technology. Patent application with publication number US005826980A disclosed a non-contact thermometer, and its non-contact temperature measurement principle is based on infrared radiation temperature measurement technology. Patent application with publication number US20050178199A1 disclosed a humidity meter with non-contact temperature measurement capability, and its non-contact temperature measurement principle is based on optical measurement technologies. Patent application with publication number US 20090210191A1 disclosed a system and method for determining the temperature of an object without physically contacting the object, measuring the temperature of the object by utilizing its outward radiation data. Non-contact temperature technology in the prior art is more based on optical temperature measurement technology.

However, in cases where there is barrier between object to be measured and measurement device, it would be limited for non-contact temperature measurement technology based on optical temperature measurement technology. Taking temperature measurement of internal cable core of high voltage electric power cable for example, because the internal cable core is protected by outer insulation layer, infrared raycannotpenetrate through the outer insulation layer, therefore infrared radiation temperature measurement technology cannot be used here. Due to the existence of the insulation layer, spectral temperature measurement technology, holographic interferometry temperature measurement technology and CCD-based tri-color temperature measurement technology is also limited. Meanwhile, because the core wire is on high potential, the temperature also cannot be measured directly by contacting the circuit considering safety. If fiber temperature measurement technology is used to measure temperature, electrical isolation is overcame, but in fact, it is really difficult to install the measurement device in practical use. Therefore, a reliable temperature measurement technology and device is urgently needed to measure temperature of internal core wires of high voltage electric power cables. The technology and device allow arrangement of safety precautions according to temperature, therefore no hidden danger of safety for electric power equipment with high voltage cables exist. The temperature measurement technology and device would possess promising market worldwide.

Summary of the invention

In order to overcome the deficiency of non-contact temperature measurement technology for electric power equipment with high voltage cables, the invention provides a coupling-based non-contact type temperature measurement system and measurement method thereof, applying to occasions where there are barriers between object to be measured and measurement device, and it could be used to measure temperature of internal core wires of high voltage electric power cables reliably. The non-contact type temperature measurement system provided by the invention has simple circuitry and low cost, applies to small-scale design and could be used in various scenarios. Moreover, its principle is based on coupling-based non-contact temperature measurement technology, distinguishing from non-contact temperature measurement technology based on optical measurement technology in the prior art, and it is hopeful to expand into a new non-contact temperature measurement field, and to acquire large commercial success in international market. The invention provides the following technology proposal.

A coupling-based non-contact type temperature measurement system, including:

Controller;

Drive circuit connected to the controller; said drive circuit amplifies two drive signals from controller and then outputs two amplified drive signals;

Switch circuit connected to drive circuit; said switch circuit outputs square signals according to two amplified drive signals;

Resonance circuit connected to switch circuit; said resonance circuit changes the square signals into AC voltage signals;

Temperature sensor coupled to resonance circuit; said temperature sensor is used to sense temperature of objects to be measured, and it deals with said AC voltage signal as working voltage, generates temperature voltage signals corresponding to said temperature and transmits said temperature voltage signals to resonance circuit;

Signal detection circuit connected to resonance circuit; said signal detection circuit collects and shapes said temperature voltage signals received by resonance circuit, and outputs detection voltage signals;

Said controller is connected to signal detection circuit; the controller analyses and calculates temperature of the objects to be measured, according to said detection voltage signals.

Said temperature sensor is series or parallel resonance type circuit, wherein resonant resistance is thermal resistance.

Said switch circuit comprises two MOS field effect transistors Q1-Q2 and two diodes D1-D2; wherein, source electrode of MOS field effect transistor Q1 is connected to first supply voltage, grid electrode of MOS field effect transistor Q1 is the first input terminal of switch circuit and receives the first drive signal output from drive circuit, drain electrode of MOS field effect transistor Q1 is connected to positive electrode of diode D1; source electrode of MOS field effect transistor Q2 is connected to the ground, grid electrode of MOS field effect transistor Q2 is the second input terminal of switch circuit and receives the second drive signal output from drive circuit, drain electrode of MOS field effect transistor Q2 is connected to negative electrode of diode D2; negative electrode of diode D1 is connected to positive electrode of diode D2 forming output terminal of switch circuit, and said output terminal of switch circuit outputs square signal.

Said signal detection circuit comprises four resistances R3-R6, one capacitance C3 and one operational amplifier U; wherein, one end of resistance R3 is input terminal of signal detection circuit and collects temperature voltage signals received by resonance circuit, resistance R3 collects temperature voltage signal received by resonance circuit, the other end of resistance R3 and one end of resistance R4 are connected to positive-phase input terminal of operational amplifier U, the other end of resistance R4 is connected to one end of resistance R5 and is also connected to the ground, the other end of resistance R5 is connected to negative-phase input terminal of operational amplifier U, one end of resistance R6 and one end of capacitance C3, positive power terminal of operational amplifier U is connected to second supply voltage, negative power terminal of operational amplifier U is connected to third supply voltage, output terminal of operational amplifier U is connected to the other end of resistance R6 and is also connected to the other end of capacitance C3, which forms output terminal of signal detection circuit, and the output terminal of signal detection circuit outputs detection voltage signal.

Said resonance circuit is series resonance type circuit.

Said controller is DSP (Digital Signal Processor).

A coupling-based non-contact type temperature measurement method, Including following steps:

(1) Switch circuit outputs square signal which is driven by controller, said square signal is changed into AC voltage signal with resonance circuit, and then said AC voltage signal is coupled to temperature sensor, the controller stops drive after the temperature sensor starts working;

(2) Temperature sensor senses temperature of object to be measured, and temperature voltage signal corresponding to said temperature is formed, and further said temperature voltage signal is coupled to resonance circuit; signal detection circuit collects and shapes temperature voltage signal received by resonance circuit, and after adjusting, provides the controller with corresponding detection voltage signal.

(3) The controller analyzes and calculates the temperature of object to be measured, according to said detection voltage signal.

In said step (3), which the controller analyzes and calculates the temperature of object to be measured includes the following steps:

1) Pick up period of said detection voltage signal;

2) Take continuous A/D samples on said detection voltage signal, pick up peak points of three continuous period of the detection voltage signal as sampling point;

3) Calculate damping coefficient of the detection voltage signal with following formula, according to period of detection voltage signal and voltage value of three sample point:

$$a = \frac{1}{T}\ln(\frac{u_1 - u_2}{u_2 - u_3}) \qquad (1)$$

wherein, $u_1$, $u_2$ and $u_3$ correspond to voltage value of three sample points, respectively; $t_1$, $t_2$ and $t_3$ are time points corresponding to $u_1$, $u_2$ and $u_3$, respectively, $t_2 = t_1 + T$, $t_3 = t_2 + T$, and T is period, $\alpha$ is damping coefficient;

4) Calculate resistance value of thermal resistor in temperature sensor with following formula, according to said damping coefficient, and thereof calculate the temperature of object to be measured according to resistance value analysis;

If temperature sensor is series resonance type circuit, then:

$$\alpha = \frac{R}{2L} \qquad (2)$$

If temperature sensor is parallel resonance type circuit, then:

$$\alpha = \frac{1}{2RC} \qquad (3)$$

Wherein, R is the resistance value of thermal resistor in temperature sensor, C is the capacity value of resonance capacitance in temperature sensor.

In the temperature measurement method in the invention, temperature sensor is isolated from other components in this system, transfer of temperature signal is implemented through electromagnetic coupling, with calculation and analysis done according to temperature signal, further realizes non-contact temperature measurement of object. The temperature measurement method in the invention can be applied for reliable temperature measurement of internal core wires in high-voltage power cables. The temperature measurement system in the invention has simple circuitry and low cost, and is suitable for small-scale design, thus applicable to various scenarios.

Brief description of drawings

Fig. 1 is structural representation of one preferred embodiment of coupling-based non-contact type temperature measurement system under the invention.
Fig. 2 is electric schematic diagram of preferred embodiments of coupling-based non-contact type temperature measurement system under the invention.
Fig. 3 is arrangement diagram of one preferred embodiment of temperature sensor in coupling-based non-contact type temperature measurement system under the invention.
Fig. 4 is waveform diagram of detection voltage signal collected by signal detection circuit in coupling-based non-contact type temperature measurement system under the invention.

Wherein, 1 represents temperature sensor, 2 represents insulating layer, 3 represents core wires.

Detailed description of embodiments

In order to descript the invention better, we will descript the measurement system and method thereof in the invention in detail, according to the drawings and detailed embodiments.

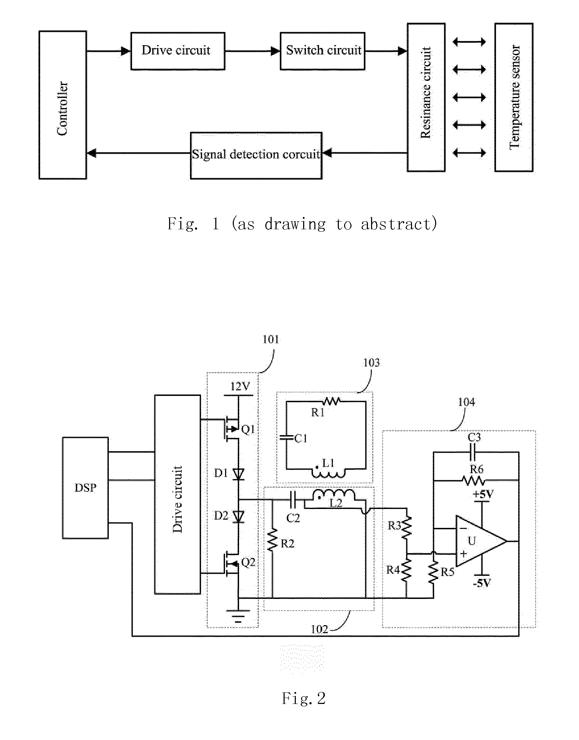

As shown in Fig. 1 and Fig. 2, a coupling-based non-contact type temperature measurement system, including: DSP, drive circuit, switch circuit 101, resonance circuit 102, signal detection circuit 104 and temperature sensor 103.

Drive circuit is connected to DSP, and outputs signals after amplifies two drive signals provided by DSP, in this embodiment, drive circuit is IRF2110 chip of International Rectifier company.

Switch circuit 101 is connected to drive circuit, and outputs square signals according to two amplified drive signals provided by drive circuit; in this embodiment, switch circuit 101 comprises two MOS field effect transistors Q1-Q2 and two diodes D1-D2; wherein, source electrode of MOS field effect transistor Q1 is connected to +12 V supply voltage, grid electrode of MOS field effect transistor Q1 is the first input terminal of switch circuit 101 and receives the first drive signal output from drive circuit, drain electrode of MOS field effect transistor Q1 is connected to positive electrode of diode D1; source electrode of MOS field effect transistor Q2 is connected to the ground, grid electrode of MOS field effect transistor Q2 is the second input terminal of switch circuit 101 and receives the second drive signal output from drive circuit, drain electrode of MOS field effect transistor Q2 is connected to negative electrode of diode D2; negative electrode of diode D1 is connected to negative electrode of diode D2 forming output terminal of switch circuit 101, and said output terminal of switch circuit 101 output square signal.

Resonance circuit 102 is connected to switch circuit 101, changes square signal into ac voltage signal; in this embodiment, resonance circuit 102 is series resonance type circuit, including one resistance R2, one capacitance C2 and one inductor L2; wherein, one end of resistance R2 is connected to one end of capacitance C2 forming input terminal of resonance circuit 102, and the input terminal of resonance circuit 102 receives square signal received output by from switch circuit 101, the other end of capacitance C2 is connected to one end of inductor L2, the other end of inductor L2 is connected to the other end of resistance R2, and is also connected to the ground.

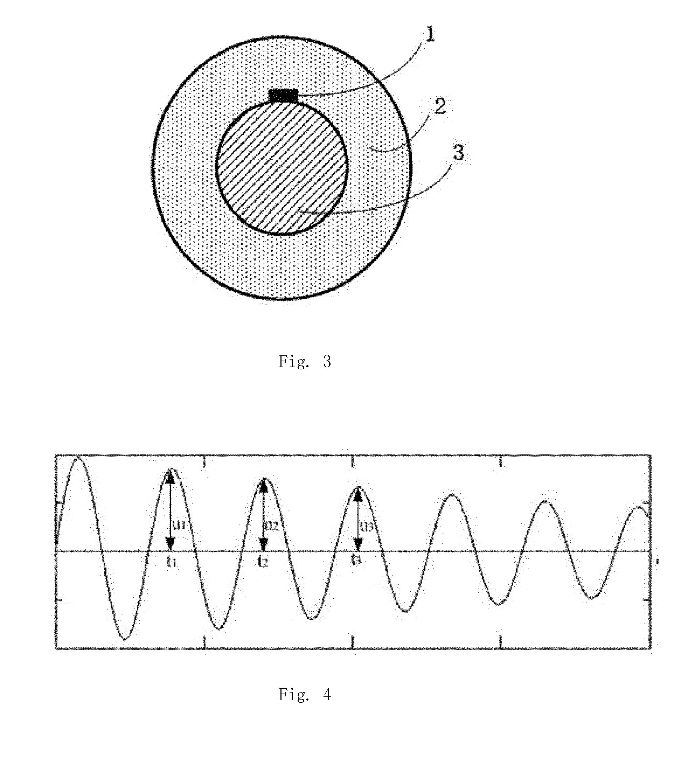

Temperature sensor 103 couples with resonance circuit 102, and takes ac voltage signal obtained by coupling with inductor L2 in resonance circuit 102 as work voltage; measuring object of this embodiment is internal core wires in high-voltage power cables, as shown in Fig.3, temperature sensor 103 is set on inner side of insulating layer of high-voltage power cables, and is used to sense temperature of internal core wire of cables, generating temperature voltage signal corresponding to temperature of core wire, and transmits said temperature voltage signal to resonance circuit 102 through coupling; temperature sensor 103 is series resonance type circuit, including one thermal resistor R1, one capacitance C1 and one inductor L1; wherein, one end of thermal resistor R1 is connected to one end of capacitance C1, the other end of capacitance C1 is connected to one end of inductor L1, the other end of inductor L1 is connected to the other end of thermal resistor R1, inductor L1 couples with inductor L2 of resonance circuit 102; in this embodiment, type of thermal resistor R1 is PT100.

Signal detection circuit 104 is connected to resonance circuit 102, said signal detection circuit collects and shapes temperature voltage signal received by resonance circuit 102, and outputs detection voltage signal; in this embodiment, signal detection circuit 104 comprises four resistances R3-R6, one capacitance C3 and one operational amplifier U; wherein, one end of resistance R3 is input terminal of signal detection circuit 104, and is connected to one end of inductorL2 of resonance circuit 102 to collect temperature voltage signal received by resonance circuit 102, the other end of resistance R3 and one end of resistance R4 are connected to positive-phase input terminal of operational amplifier U, the other end of resistance R4 is connected to one end of resistance R5, and is also connected to the ground, the other end of resistance R5 is connected to negative-phase input terminal of operational amplifier U, one end of resistance R6 and one end of capacitance C3, positive power terminal of operational amplifier U is connected to +5 V supply voltage, negative power terminal of operational amplifier U is connected to -5 V supply voltage, output terminal of operational amplifier U and the other end of resistance R6 are connected to the other end of capacitance C3 forming output terminal of signal detection circuit 104, outputting detection voltage signal.

DSP is connected to signal detection circuit 104, receives detection voltage signal output from signal detection circuit 104, and calculates temperature of internal core wires of cables according to said detection voltage signal; in this embodiment, DSP is TMS320F28035 chip of Texas Instruments Company.

The coupling-based non-contact temperature measurement method in this embodiment includes following steps:

(1) DSP outputs a pair of complementary drive signals to two MOS field effect transistors Q1-Q2 of switch circuit 101 with drive circuit, respectively, two MOS field effect transistors Q1-Q2 complement switch movement, making switch circuit 101 output high frequency square signal; resonance circuit 102 changes square signal into ac voltage signal, further couples AC voltage signal to temperature sensor 103 with inductor L2, after temperature sensor 103 works stably, DSP stops outputting drive signal, and then capacitance C2 of resonance circuit 102 and inductor L2 stops oscillating and discharges electricity rapidly.

(2) Temperature sensor 103 starts to work after AC voltage signal is obtained by coupling of inductor L1 forms current loop, temperature sensor 103 senses temperature of internal core wires of cables with thermal resistor R1, and generates temperature voltage signal corresponding to core wire temperature, and further couples temperature voltage signal to resonance circuit 102 with inductor L1; signal detection circuit 104 collects temperature voltage signal obtained by coupling of inductor L2 of resonance circuit 102, and after adjusting, provides DSP with corresponding detection voltage signal.

(3) DSP picks up period of detection voltage signal according to said detection voltage signal, and taking A/D samples on detection voltage signal continuously, then picks up peak points of three continuous period of detection voltage signal wave pattern as sample points, calculates damping coefficient of detection voltage signal with following formula, according to period of detection voltage signal and voltage of three sample point;

$$a = \frac{1}{T} \ln(\frac{u_1 - u_2}{u_2 - u_3}) \qquad (1)$$

wherein, $u_1$, $u_2$ and $u_3$ are corresponding voltage values of three sample points, respectively; $t_1$, $t_2$ and $t_3$ are time points corresponding to $u_1$, $u_2$ and $u_3$, respectively, $t_2 = t_1 + T$, $t_3 = t_2 + T$, and T is period, $\alpha$ is damping coefficient;

DSP calculates value of thermal resistor R1 of temperature sensor 103 with following formula based on damping coefficient, and further calculates temperature of internal core wires of cables based on the relation of resistance value and temperature of thermal resistor R1:

$$\alpha = \frac{R}{2L} \qquad (2)$$

Wherein, R is resistance value of thermal resistor R1 in temperature sensor 103, L is inductor value of inductor L1 in temperature sensor 103.

Technology category in the invention includes any assemble of said any part.

**Claims**

1. A coupling-based non-contact type temperature measurement system, includes controller, drive circuit, switch circuit, resonance circuit, temperature sensor, signal detection circuit, **characterized in that**: drive circuit is connected to the controller, drive circuit amplifies two drive signals from controller and then outputs the amplified signals, switch circuit is connected to drive circuit, switch circuit outputs square signals according to two amplified drive signals, resonance circuit is connected to switch circuit, resonance circuit changes the square signals into AC voltage signals, temperature sensor is used to sense temperature of object to be measured and couples with resonance circuit, and it takes AC voltage signals changed by resonance circuit as working voltage, and generates temperature voltage signals corresponding to temperature of object to be measured, and transmits temperature voltage signals to resonance circuit, signal detection circuit is connected to resonance circuit, signal detection circuit collects and shapes temperature voltage signals received by resonance circuit, and outputs detection voltage signals, controller is connected to signal detection circuit, analyzes and calculates the temperature of the object to be measured based on detection voltage signal output from detection circuit, further temperature sensor is isolated from other apparatuses in this system, realizes transmission of temperature signal through electromagnetic coupling, calculates and analyze according to temperature signal, and further realizes non-contact temperature measurement with object, said temperature sensor is series type or parallel type resonance circuit, wherein resonant resistance is thermal resistance, said switch circuit comprises two MOS field effect transistors Q1-Q2 and two diodes D1-D2, wherein, source electrode of MOS field effect transistor Q1 is connected to the first supply voltage, grid electrode of MOS field effect transistor Q1 is the first input terminal of switch circuit, drain electrode of MOS field effect transistor Q1 is connected to positive electrode of diode D1, source electrode of MOS field effect transistor Q2 is connected to the ground, grid electrode of MOS field effect transistor Q2 is the second input terminal of switch circuit, drain electrode of MOS field effect transistor Q2 is connected to negative electrode of diode D2, negative electrode of diode D1 is connected to positive electrode of diode D2 forming output terminal of switch circuit, Said signal detection circuit comprise four resistances R3-R6, one capacitance C3 and one operational amplifier U, wherein, one end of resistance R3 is input terminal of signal detection circuit, the other end of resistance R3 and one end of resistance R4 are connected to positive-phase input terminal of operational amplifier U, the other end of resistance R4 is connected to one end of resistance R5, and is also connected to the ground, the other end of resistance R5 is connected to negative-phase input terminal of operational amplifier U, one end of resistance R6 and one end of capacitance C3, positive power terminal of operational amplifier U is connected to second supply voltage, negative power terminal of operational amplifier U is connected to third supply voltage, output terminal of operational amplifier U is connected to the other end of resistance R6 and the other end of capacitance C3, which forms output terminal of signal detection circuit.

2. Coupling-based non-contact type temperature measurement system according to claim 1, **characterized in that**: said resonance circuit is series type resonance circuit.

3. Coupling-based non-contact type temperature measurement system according to claim 1, **characterized in that**: said controller is DSP.

4. A coupling-based non-contact type temperature measurement method, including following steps:

(1) Square signal is output from switch circuit driven by controller, said square signal is changed into AC voltage signal with resonance circuit, and then said AC voltage signal is coupled to temperature sensor, controller stops driving after the temperature sensor starts working,

(2) Temperature sensor senses temperature of object to be measured, and temperature voltage signal corresponding to said temperature is formed, and further said temperature voltage signal is coupled to resonance circuit, signal detection circuit collects and shapes temperature voltage signal received by resonance circuit, and the shaped temperature signal provides corresponding detection voltage signal,

(3) The controller picks up period of said detection voltage signal, according to said detection voltage signal, taking continuous A/D samples on said detection voltage signal continuously, picks up peak points of three continuous period of the detection voltage signal as sampling points, calculates damping coefficient of the detection voltage signal with following formula, according to period of detection voltage signal and voltage value of three sample point:

$$a = \frac{1}{T}\ln(\frac{u_1 - u_2}{u_2 - u_3})$$

$$(1)$$

wherein, $u_1$, $u_2$ and $u_3$ are corresponding voltage values of three sample points, respectively, $t_1$, $t_2$ and $t_3$ are time points corresponding to $u_1$, $u_2$ and $u_3$, respectively, $t_2 = t_1 + T$, $t_3 = t_2 + T$, and T is period, $\alpha$ is damping coefficient, calculates resistance value of thermal resistor in temperature sensor with following formula, according to said damping coefficient, and thereof solves the temperature of object to be measured according to resistance value analysis,

If temperature sensor is series resonance type circuit, then:

$$\alpha = \frac{R}{2L} \qquad\qquad (2)$$

If temperature sensor is parallel resonance type circuit, then:

$$\alpha = \frac{1}{2RC} \qquad\qquad (3)$$

Wherein, R is the resistance value of thermal resistor in temperature sensor, C is the capacity value of resonance capacitance in temperature sensor.

$$\alpha = \frac{R}{2L}$$

EP 2 799 825 A1

Fig. 1 (as drawing to abstract)

Fig.2

Fig. 3

Fig. 4

# INTERNATIONAL SEARCH REPORT

| | International application No. |
|---|---|
| | **PCT/CN2012/071580** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G01K

Documentation searched other than minimum documentation to the extent that such documents are included in the fields searched

Electronic data base consulted during the international search (name of data base and, where practicable, search terms used)

CNABS, VEN, CNTXT, TWTXT, USTXT, WOTXT, EPTXT, CJFD: thermometry, temperature, drive, switch, resonant, resonance, oscillation, resistance, thermistor, inductance, capacitance, voltage, cable

**C. DOCUMENTS CONSIDERED TO BE RELEVANT**

| Category* | Citation of document, with indication, where appropriate, of the relevant passages | Relevant to claim No. |
|---|---|---|
| A | CN 1501034 A (XIAMEN JINMINGDA SCIENCE & TECHNOLOGY DEVELOPMENT CO., LTD.), 02 June 2004 (02.06.2004), claims 1-2, and figure 1 | 1-4 |
| A | CN 201488835 U (LI, Chao), 26 May 2010 (26.05.2010), the whole document | 1-4 |
| A | CN 2223841 Y (ZHAO, Xin), 03 April 1996 (03.04.1996), the whole document | 1-4 |
| A | CN 101915625 A (BEIJING PEKING UNIVERSITY UNITY MICROSYSTEMS TECHNOLOGY CO., LTD.), 15 December 2010 (15.12.2010), the whole document | 1-4 |
| A | JP 60-233521 A (DENRIYOKU CHUO KENKYUSHO), 20 November 1985 (20.11.1985), the whole document | 1-4 |
| A | GB 2466288 A (QHI GROUP LTD.), 23 June 2010 (23.06.2010), the whole document | 1-4 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 August 2012 (29.08.2012) | **13 September 2012 (13.09.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**HU, Yuelan**<br><br>Telephone No.: (86-10) **62085736** |

Form PCT/ISA/210 (second sheet) (July 2009)

## INTERNATIONAL SEARCH REPORT
### Information on patent family members

| | International application No. |
|---|---|
| | **PCT/CN2012/071580** |

| Patent Documents referred in the Report | Publication Date | Patent Family | Publication Date |
|---|---|---|---|
| CN 1501034 A | 02.06.2004 | None | |
| CN 201488835 U | 26.05.2010 | None | |
| CN 2223841 Y | 03.04.1996 | None | |
| CN 101915625 A | 15.12.2010 | None | |
| JP 60-233521 A | 20.11.1985 | JP 3076694 B | 06.12.1991 |
| | | JP 1706832 C | 27.10.1992 |
| GB 2466288 A | 23.06.2010 | WO 2010070338 A | 24.06.2010 |
| | | EP 2359113 A | 24.08.2011 |
| | | US 2011280281 A | 17.11.2011 |

Form PCT/ISA/210 (patent family annex) (July 2009)

## INTERNATIONAL SEARCH REPORT

| | International application No. |
|---|---|
| | **PCT/CN2012/071580** |

**CLASSIFICATION OF SUBJECT MATTER:**

G01K 7/22 (2006.01) i

G01K 7/24 (2006.01) i

G01K 7/00 (2006.01) i

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040066833 A1
- US 20070019705 A1
- US 005826980 A
- US 20050178199 A1
- US 20090210191 A1